# EUROPÄISCHE PATENTSCHRIFT

(11) **EP 0 862 504 B1**
(45) Veröffentlichungstag und Bekanntmachung des Hinweises auf die Patenterteilung: **30.08.2000**
(21) Anmeldenummer: 96941018.2
(22) Anmeldetag: 25.11.1996
(51) Int. Cl.: B07C 5/34

(54) **VERFAHREN UND VORRICHTUNG ZUM TRANSPORTIEREN VON BEHÄLTERN VORBEI AN EINER EINRICHTUNG ZUM INSPIZIEREN DES BODENS DER BEHÄLTER**
PROCESS AND DEVICE FOR CONVEYING CONTAINERS PAST A DEVICE FOR INSPECTING THE CONTAINER BASES
PROCEDE ET DISPOSITIF POUR FAIRE PASSER DES CONTENANTS DEVANT UN DISPOSITIF CHARGE DE CONTROLER LEUR FOND

(30) Priorität: 24.11.1995 DE 29518639 U
(43) Veröffentlichungstag der Anmeldung: 09.09.1998
(73) Patentinhaber: HEUFT SYSTEMTECHNIK GMBH, 56659 Burgbrohl (DE)
(72) Erfinder: HEUFT, Bernhard, D-56659 Burgbrohl (DE); GOLLER, Hans-Ulrich, D-53173 Bonn-Bad Godesberg (DE)
(74) Vertreter: Abitz, Walter, Dr.-Ing.
(86) Internationale Anmeldenummer: EP9605192
(87) Internationale Veröffentlichungsnummer: WO9719766

(56) Entgegenhaltungen:
- EP-A- 0 124 164
- DE-A- 2 717 955
- US-A- 4 915 237

## Beschreibung

Die Erfindung betrifft ein Verfahren und eine Vorrichtung zum Transportieren von Behältern vorbei an einer Einrichtung zum Inspizieren des Bodens der Behälter z.B. auf Verunreinigungen, Materialfehler und Fremdkörper. Die Behälter werden auf einem ersten Transporteur zur Inspektionseinrichtung hingeführt und auf einem zweiten Transporteur von der Inspektionseinrichtung weggeführt. Zwischen dem ersten und dem zweiten Transporteur besteht eine Lücke, innerhalb der die Behälter von der Inspektionseinrichtung inspiziert werden und innerhalb der die Behälter zumindest nicht auf ihrer ganzen Standfläche unterstützt sind. Durch seitliche Führungseinrichtungen werden die Behälter geführt.

Derartige Transportvorrichtungen werden insbesondere bei der Inspektion von Leerflaschen (leeren Glas- oder Kunststoffflaschen) verwendet. Die Inspektionseinrichtung besteht dabei aus einer im Bereich der Lücke unterhalb der Leerflaschen angeordneten Lichtquelle und einer über den Leerflaschen angeordneten Erkennungseinrichtung, z.B. einer CCD-Kamera, die durch die Flaschenöffnung hindurch den Boden der Leerflaschen inspiziert.

Aus EP-A-0 124 164 und EP-B1-0 415 154 ist es bekannt, die Leerflaschen seitlich zwischen mitlaufenden Riemen zu halten und in dieser Weise über die Lücke weiterzubewegen.

Es ist auch bekannt, Leerflaschen in Sternrädern festzuhalten und in dieser Weise durch eine Einrichtung zur Bodeninspektion zu führen.

In beiden Fällen sind die Behälter, z.B. Leerflaschen, zunächst zu vereinzeln, so daß sie mit einem bestimmten gegenseitigen Mindestabstand oder zumindest drucklos (ohne Staudruck) in einer Reihe auf dem ersten Transporteur gefördert werden. Dieses Vereinzeln der Behälter erfolgt mittels spezieller Einrichtungen. Nach dem Inspizieren werden die Behälter wieder unter Staudruck weiterbefördert, da die üblichen Füllmaschinen erfordern, daß die Behälter im Einlauf der Füllmaschine unter Staudruck bewegt werden. Bei der Bewegung unter Staudruck werden die Behälter ungeordnet auf einem Förderband oder einer feststehenden Unterlage durch den Druck der nachfolgenden Behälter vorwärtsbewegt. Seitlich am Förderband oder der feststehenden Unterlage befindet sich dabei ein Geländer, um ein Herunterfallen der Behälter zu verhindern.

Der Erfindung liegt die Aufgabe zugrunde, den Transport von Behältern im Bereich von Inspektionseinrichtungen zu vereinfachen, bei denen die Behälter über eine Lücke zwischen zwei Transporteuren bewegt werden.

Die Lösung dieser Aufgabe erfolgt bei einem Verfahren und bei einer Vorrichtung der eingangs genannten Art durch Transportieren der Behälter unter Staudruck bzw. dadurch, daß eine Einrichtung zur Erzeugung eines Staudrucks vorgesehen ist und daß die seitlichen Führungseinrichtungen, die sich zu beiden Seiten des ersten und des zweiten Transporteurs und im Bereich der Lücke zwischen den Transporteuren befinden, so stabil ausgebildet sind, daß die Behälter unter Staudruck transportiert werden können.

Dadurch, daß die Behälter unter Staudruck transportiert werden, stützen sie sich gegenseitig. Der gegenseitige Druck reicht aus, um die Behälter innerhalb einer Lücke, die etwa bis zum 3fachen des Durchmessers der Behälter betragen kann, zu halten und so diese Lücke ohne "festen Boden" zu überbrücken. Die Reibung zwischen den gegeneinander drückenden Behältern reicht also aus, um eine vertikale Verschiebung der Behälter zueinander zu verhindern. Bei den Behältern kann es sich insbesondere um Dosen oder Glas- oder Kunststoffflaschen handeln. Die Behälter können rotationssymmetrisch sein oder eckigen Querschnitt haben.

Besondere Vorkehrungen können bezüglich des Betriebsbeginns und des Betriebsendes erforderlich sein, da bei Betriebsbeginn noch kein Rückstau vorhanden ist und bei Betriebsende kein Staudruck von nachfolgenden Behältern mehr erzeugt wird. Es bestehen hierzu mehrere Möglichkeiten:

Erstens kann eine feststehende, schmale Halsführung in Form gleitfähiger, feststehender Geländer vorgesehen werden, die bei Kronkork-Flaschen unterhalb der Mündungseichel, bei Schraubverschlußflaschen unterhalb des Gewindekopfes und bei anderen Behältern an ähnlich gearteten Stellen angreift, so daß der Behälter bei Betriebsbeginn von den nachfolgenden Behältern über die Lücke zwischen den Transporteuren geschoben wird, ohne daß er nach unten durchrutschen kann.

Zweitens kann eine Schutzglasplatte, die über der unter der Lücke angeordneten Strahlungsquelle der Inspektionseinrichtung angebracht ist, bei Betriebsbeginn vorübergehend bis zur Höhe der Transportebene hochgefahren werden, so daß die Behälter stufenlos vom ersten Transporteur zum zweiten Transporteur gleiten können. Bei Erreichen der Staudruckbedingungen und damit Selbsthalten der Behälter über der Lücke, wird die Schutzglasplatte innerhalb der Lücke um einige Millimeter abgesenkt, so daß kein direkter Kontakt der Behälter mit der Schutzglasplatte mehr besteht und damit ein Verschleiß verhindert wird.

Sowohl bei der Halsführung als auch bei der Schutzglasplatte ist es wichtig, daß diese so angeordnet werden, daß sie im normalen Betrieb, d.h. wenn die Behälter unter Staudruck transportiert werden und sich im Bereich der Bodeninspektion gegenseitig stützen und durch die seitlichen Führungseinrichtungen gestützt werden, nicht durch die Behälter belastet werden. Die Halsführung wird daher etwas tiefer als die Position angeordnet, in der sich im Normalbetrieb die Mündungseicheln und die Gewindeköpfe der Kronkork- bzw. Schraubverschlußflaschen befinden. Die Halsführung greift daher im Normalbetrieb nur seitlich an den Flaschenhälsen an, trägt jedoch nicht das Gewicht der Flaschen. Nur wenn bei Betriebsanfang, Betriebsende oder bei Betriebsstörungen die Flaschen nicht unter Staudruck stehen, und die Flaschen daher bei der Bodeninspektion in der Lücke zwischen beiden Transporteuren nicht durch die benachbarten Flaschen und die Seitenführungen gestützt werden und infolgedessen nach unten sinken, werden sie durch die Halsführung gestützt. Ebenso ist die Schutzglasplatte etwas unter dem Niveau der Transporteure angeordnet, so daß die Flaschen nur bei fehlendem Staudruck die Schutzglasplatte berühren und durch sie abgestützt werden.

Bei der seitlichen Führungseinrichtung im Bereich der Lücke kann es sich um eine Fortführung der seitlichen Geländer handeln, die für den Transport unter Staudruck entlang des ersten und des zweiten Transporteurs erforderlich sind. Eine dritte Möglichkeit zur Behebung der bei Betriebsbeginn auftretenden Probleme besteht darin, innerhalb der Lücke ein oder beide seitlichen Geländer zu unterbrechen und durch eine Schwamm-oder Gummiwalze mit vertikaler Drehachse zu ersetzen. Diese Walzen werden mit einem Abstand von dem gegenüberliegenden Geländer bzw. der gegenüberliegenden Walze angeordnet, der kleiner als der Durchmesser der Behälter ist. Damit die Behälter einzeln von der Inspektionseinrichtung erfaßt werden können, soll die Breite des ersten Transporteurs, d.h. der Abstand der seitlichen Geländer des ersten Transporteurs nicht mehr als etwa das 1,2fache des Durchmessers der Behälter und vorzugsweise nur einige Millimeter mehr als der Durchmesser der Behälter betragen. Die Walzen können freilaufend oder angetrieben sein. Die Walzen halten die Behälter nur innerhalb der Lücke zwischen den Transporteuren und nur in diesem Bereich ist das seitliche Geländer durch die Walzen ersetzt.

Eine vierte Möglichkeit besteht darin, durch den Transport von speziellen Hilfseinrichtungen bei Betriebsbeginn den notwendigen Staudruck zu erzeugen. Diese Hilfseinrichtungen können aus einem oder aus mehreren mechanisch gekoppelten, zylindrischen Körpern bestehen, die von Hand auf den ersten Transporteur gesetzt werden. Besteht die Hilfseinrichung aus einem einzigen Körper, so hat der Körper normalerweise einen Durchmesser oder eine Querabmessung, die größer ist als der Abstand der seitlichen Geländer des Transporteurs, und ist der Körper verformbar, indem er z.B. aus elastischem Material besteht oder seine an dem Geländer anliegenden Seitenwände unter Federdruck stehen. Durch die zwischen Körper und dem Geländer auftretende Reibung setzt eine solche Hilfseinrichtung dem von den nachfolgenden Behältern ausgeübten Druck einen Widerstand entgegen, der den Staudruck simuliert. Bei drei oder mehr Körpern werden diese mechanisch über Federkraft in Dreiecksform oder zickzackförmig versetzt angeordnet, so daß sie gegen die gegenüberliegenden Geländer des Transporteurs drücken und dadurch der Bewegung der Behälter einen Widerstand entgegensetzen. Die Hilfseinrichtung kann auch so ausgebildet sein, daß auf die Achsen der Körper eine Bremskraft ausgeübt wird, die der Drehung der Körper entgegenwirkt. Die unmittelbar auf eine solche Hilfseinrichtung folgenden Behälter verhalten sich dabei in der gleichen Weise, wie bei dem Transport unter Staudruck. Ebenso kann bei Betriebsende nach dem letzten Behälter eine Hilfseinrichtung in Form eines mehrteiligen Körpers auf den ersten Transporteur gesetzt werden, wobei der mehrteilige Körper durch die Kopplung seiner Einzelelemente die Staubedingung ersetzt und aufgrund seiner Länge die Lücke überbrücken kann. Die Gesamtlänge der Hilfseinrichtung ist dabei vorzugsweise mindestens doppelt so groß wie die Länge der Lücke, so daß die Hilfseinrichtung die Lücke ohne Schwierigkeiten überbrücken kann. Diese Hilfseinrichtungen können später automatisch bei einer Ausleitvorrichtung aus dem Strom der Behälter entfernt werden. Es ist auch möglich, sie durch eine automatische Rückführeinrichtung für den nächsten Einsatz am Einlauf der Anlage zu positionieren und dann automatisch wieder zuzuführen.

Es besteht auch die Möglichkeit, die Bodeninspektion in zwei oder mehr Teile zu unterteilen, so daß innerhalb des Transportweges nie eine Lücke entsteht, die größer als der Durchmesser eines Behälters ist, oder immer gewährleistet ist, daß der Behälter einseitig noch auf festem Boden geführt wird. Die Lücke zwischen den beiden Transporteuren kann z.B. durch ein Blech überbrückt werden, das gegeneinander versetzte Aussparungen aufweist. Es kann zunächst die linke Hälfte des Bleches auf einer dem Behälterdurchmesser entsprechenden Länge ausgespart sein und dann die rechte Hälfte, so daß zunächst die linke Seite des Behälterbodens und dann die rechte Seite des Behälterbodens inspiziert wird. Es ist auch möglich, zwischen den beiden Transporteuren schräg oder quer verlaufende Führungen oder Bleche in der Transportebene vorzusehen, über die die Behälter geschoben werden, während sie inspiziert werden. Die für die Inspektion verwendete Erkennungseinrichtung kann dabei aus mehreren Kameras für die einzelnen Inspektionsbereiche oder aus einer einzigen Kamera mit optischen Bildteilern bestehen, die über Spiegel realisiert werden können.

Es sind auch Kombinationen dieser Möglichkeiten denkbar, wobei insbesondere die als vierte Möglichkeit angegebenen Hilfseinrichtungen in Verbindung mit einer der anderen Vorrichtungen verwendet werden können, da diese Hilfseinrichtungen die einzige Möglichkeit sind, bis zum Betriebsende unter Staudruck zu arbeiten.

Das Verfahren und die Vorrichtung gemäß der Erfindung eignen sich insbesondere für Leerflascheninspektoren kleiner und mittlerer Leistung, d.h. mit einem Durchsatz von bis zu 36000 Flaschen/Stunde, wobei jedoch auch durchaus höhere Geschwindigkeiten möglich sind.

Ausführungsbeispiele der Erfindung werden nachfolgend anhand der Zeichnung erläutert. Es zeigen:
- Fig. 1 und 2: in Draufsicht bzw. in Seitenansicht eine Anlage zur Inspektion von Leerflaschen;
- Fig. 3: eine Transportvorrichtung mit einer im Bereich der Lücke hochfahrbaren Schutzglasplatte;
- Fig. 4 und 5: in Draufsicht bzw. in Seitenansicht eine Transportvorrichtung mit seitlich angeordneten Schwamm-oder Gummiwalzen im Bereich der Lücke;
- Fig. 6: in Draufsicht eine Transportvorrichtung, bei der die Behälter zwischen den Transporteuren nur auf einem Teil ihrer Standfläche unterstützt sind;
- Fig. 7: ein Ausführungsbeispiel ähnlich dem von Fig. 6, wobei die Behälter durch im Bereich der Lücke zwischen den Transporteuren schräg angeordnete Streifen abgestützt werden;
- Fig. 8 und 9: Hilfseinrichtungen zur Erzielung eines Staudruckes bei Betriebsbeginn und Betriebsende;
- Fig. 10 bis 14: Ausführungsbeispiele für die Anordnung der Transporteure und
- Fig. 15: einen Schnitt nach 15-15 von Fig. 2.

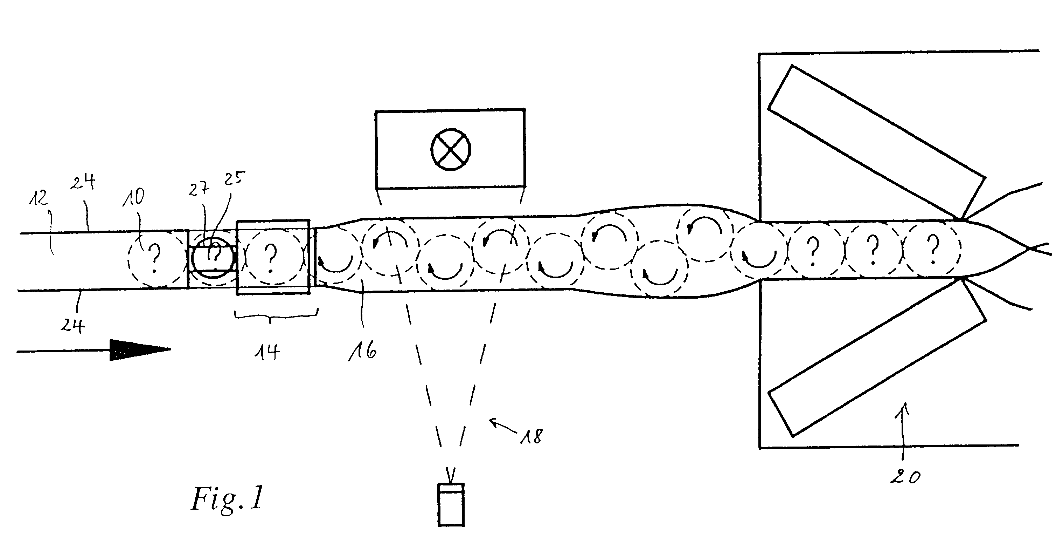

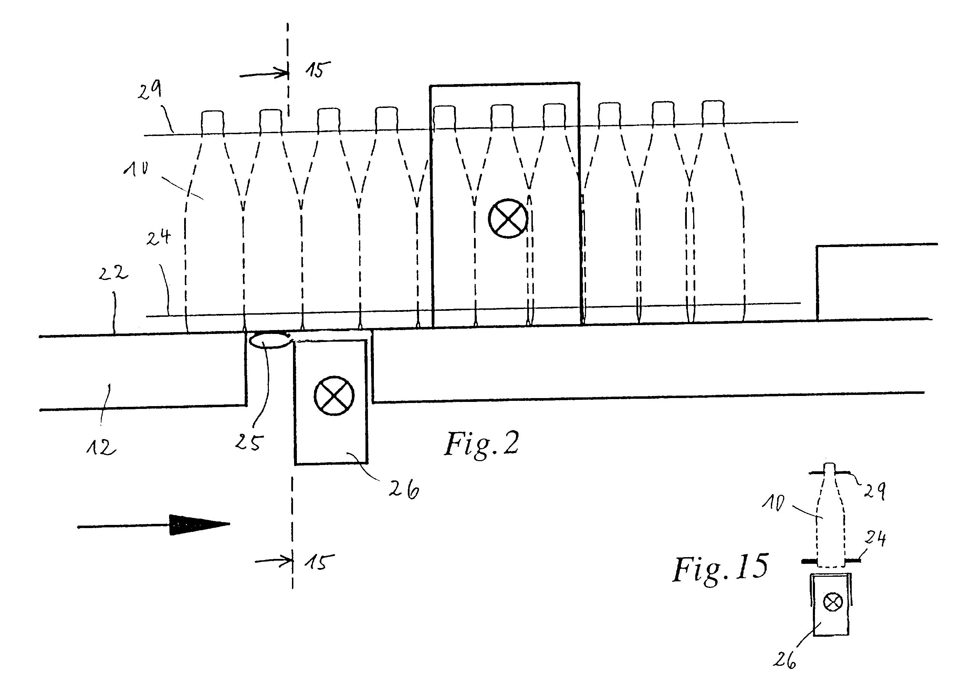

Fig. 1 und 2 zeigen eine Anlage zum Inspizieren von Leerflaschen. Die Leerflaschen 10 werden auf einem ersten Transporteur 12 herangeführt, innerhalb einer Lücke 14 einer Bodeninspektion unterzogen, danach auf einem zweiten Transporteur 16 weiterbefördert und vorbei an einer Seitenwand-Inspektionsstation 18 zu einer Ausleitstation 20 geführt. Der erste und der zweite Transporteur 12, 16 können übliche Förderbänder oder Gliederkettenförderer sein. Sie sind von bekannter Bauart und werden daher hier nicht näher beschrieben. Die Transporteure 12, 16 können auch von anderer Bauart sein, und die Behälter können durch Luftkissen, Rollen usw. abgestützt sein. Bei den Transporteuren 12, 16 kann es sich auch um feststehende Platten handeln, über die die Behälter von einer einen Staudruck erzeugenden Einrichtung, z.B. einem Sternrad oder einem Gliederkettenförderer geschoben werden. Die Transporteure 12, 16 bilden eine Transportebene 22, auf der die Leerflaschen 10 stehen. Seitlich in geringem Abstand oberhalb der Transportebene 22 sind auf beiden Seiten Geländer 24 als Führungseinrichtungen für die Leerflaschen 10 vorgesehen. Durch die Geländer 24 werden die unter Staudruck stehenden Flaschen auf dem ersten und zweiten Transporteur 12, 16 gehalten. Die Geländer 24 sind daher sehr stabil ausgeführt. Das Geländer 24 ist von dem ersten Transporteur 12 über die Lücke 14 zum zweiten Transporteur 16 fortgeführt.

Innerhalb der Lücke 14 werden die Leerflaschen 10 nicht von unten unterstützt. Sie halten sich gegenseitig durch den aufeinander ausgeübten Druck und durch die Reibung mit dem Geländer 24. Die Breite des ersten und zweiten Transporteurs 12, 16, d.h. der Abstand der beiden Geländer 24 ist nur geringfügig größer als der Durchmesser der Leerflaschen 10. Auf diese Weise kann eine Lücke 14 überbrückt werden, deren Länge bis zum 3fachen des Durchmessers der Leerflaschen 10 beträgt. Am Ende des ersten Transporteurs 12 ist ein Bodenabblaser 25 angeordnet, der von unten den Boden der Leerflaschen durch einen Luftstrahl abbläst, so daß Wassertropfen oder anhaftende Teilchen vom Boden abgeblasen werden. Der Bodenabblaser 25 ist eine in der Mitte eines pilzförmigen Kopfes austretende Luftdüse. Die Leerflaschen werden durch Schienen 27 über den Bodenabblaser geführt, so daß die Leerflaschen 10 beim Bodenabblaser 25 noch abgestützt sind. Um die Leerflaschen auch bei Betriebsbeginn und bei Betriebsende, wenn noch kein Staudruck aufgebaut ist bzw. keine nachfolgenden Flaschen mehr Staudruck erzeugen, über die Lücke 14 bewegen zu können, ist im Bereich der Lücke 14 eine Halsführung 29 (Fig. 15) vorgesehen, die am Hals der Leerflaschen unmittelbar unterhalb der Mündungseichel oder des Gewindekopfes angreift und auf diese Weise verhindert, daß die Flaschen 10 bei fehlendem Staudruck innerhalb der Lücke 14 absacken. Die Halsführung 29 ist etwas nach unten versetzt, so daß im Normalbetrieb, wenn die Leerflaschen unter Staudruck stehen, ein geringfügiger Abstand zwischen Halsführung und Mündungseichel bzw. Gewindekopf besteht. Die Halsführung 29 führt dann zwar den Flaschenhals seitlich, trägt jedoch nicht das Gewicht der Leerflaschen, so daß der Verschleiß soweit wie möglich reduziert ist.

Innerhalb der Lücke 14 ist unterhalb der Transportebene 22 eine Lichtquelle 26, die die Leerflaschen 10 von unten bestrahlt. Über den Leerflaschen 10 befindet sich eine Erkennungseinrichtung mit einer CCD-Kamera. Die Einrichtungen zur Inspektion des Bodens der Leerflaschen 10 sind von üblicher Bauart und werden daher nicht näher beschrieben.

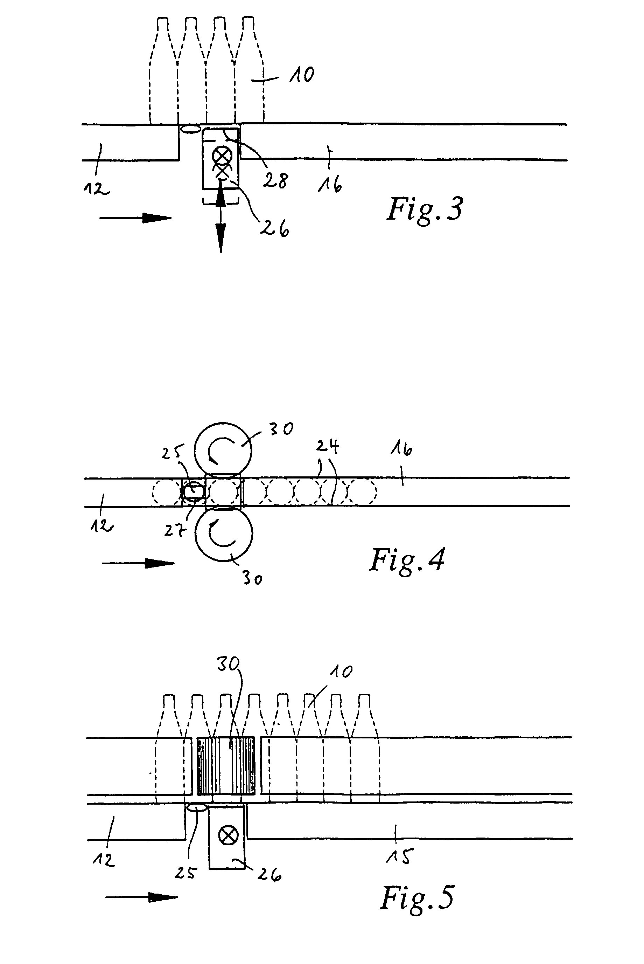

Bei der in Fig. 3 gezeigten Ausführungsform ist die Lichtquelle 26 auf der Oberseite durch eine Schutzglasplatte 28 abgedeckt und in der Höhe verschiebbar gelagert. Dadurch besteht die Möglichkeit, bei Betriebsbeginn, wenn sich die Leerflaschen 10 noch nicht unter Staudruck befinden, die Lichtquelle nach oben zu versetzen, so daß die Lücke 14 zwischen dem ersten und dem zweiten Transporteur 12, 16 durch die Schutzglasplatte 28 der Lichtquelle 26 überbrückt wird. Sobald sich dann innerhalb der Reihe der Leerflaschen 10 der Staudruck aufgebaut hat, kann die Lichtquelle 26 nach unten verfahren werden, da die Leerflaschen 10 innerhalb der Lücke 14 nunmehr keine Abstützung mehr benötigen.

Eine andere Möglichkeit, die bei Betriebsbeginn auftretenden Schwierigkeiten zu überwinden besteht darin, im Bereich der Lücke 14 die Geländer 24 durch Schwamm- oder Gummiwalzen 30 zu ersetzen, die so neben der Lücke 14 mit vertikaler Drehachse angeordnet sind, daß sie an den Leerflaschen 10 seitlich anliegen (Fig. 4 und 5). Dadurch wird ein Absacken der Leerflaschen 10 innerhalb der Lücke 14 verhindert, wenn kein Staudruck besteht. Der Abstand der beiden Schwamm- oder Gummiwalzen 30 ist dazu kleiner als der Durchmesser der Leerflaschen 10.

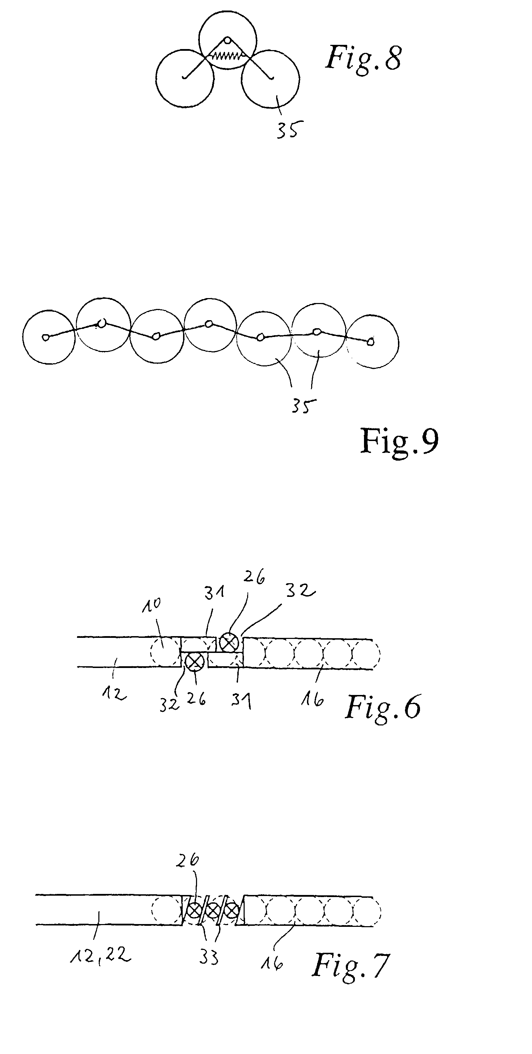

Eine Möglichkeit zur Vermeidung von Schwierigkeiten bei Betriebsbeginn besteht auch darin gemäß Fig. 6 innerhalb der Lücke Abstützplatten 31 vorzusehen, deren Breite ungefähr dem halben Abstand der Geländer 24 (in Fig. 6 weggelassen) entspricht, so daß zwei gegeneinander versetzte Bereiche 32 zwischen dem ersten und dem zweiten Transporteur 12, 16 bestehen, innerhalb welcher Bereiche 32 die Leerflaschen 10 nicht unterstützt sind. Die Breite dieser Bereiche entspricht etwa dem halben Durchmesser der Leerflaschen und die Länge dieser Bereiche 32 ist etwas größer als der Durchmesser der Leerflaschen. Die beiden Bereiche 32 sind in Transportrichtung so gegeneinander versetzt, daß sie sich nicht überlappen. Es wird dadurch erreicht, daß die Leerflaschen 10 einseitig noch auf den Abstützplatten 31 geführt werden.

In ähnlicher Weise können gemäß Fig. 7 innerhalb der Lücke 14 schräg verlaufende Führungen 33 in der Transportebene 22 angeordnet werden, wobei der Abstand der Führungen 33 in Transportrichtung etwa dem halben Durchmesser der Leerflaschen 10 entspricht. Die Führungen 33 können auch quer zur Transportrichtung verlaufen. Die Inspektion des Bodens der Leerflaschen 10 findet innerhalb des Zwischenraums zwischen den Führungen 33 statt. Die Erkennungseinrichtung kann dazu aus mehreren Kameras für die einzelnen Zwischenräume bestehen. Sie kann auch aus einer einzigen Kamera mit entsprechenden optischen Bildteilern bestehen, die über Spiegel realisiert werden. In Fig. 7 ist aus Gründen der Übersichtlichkeit ebenfalls das Geländer 24 nicht eingezeichnet.

Auch bei Betriebsende ergeben sich Schwierigkeiten dadurch, daß die letzten Leerflaschen 10 nicht unter Staudruck gefördert werden und auch ihr Bewegungsimpuls unter Umständen nicht ausreicht, um sie antriebslos über die Lücke 14 zu bewegen. Sowohl die bei Betriebsbeginn als auch die bei Betriebsende durch den fehlenden Staudruck auftretenden Schwierigkeiten lassen sich dadurch überwinden, daß zwei oder besser drei oder mehr zylindrische Körper 35 in der in den Fig. 8 und 9 dargestellten Weise mechanisch gekoppelt werden und diese gekoppelten Körper 35 bei Betriebsbeginn vor den Leerflaschen und bei Betriebsende nach den letzten Leerflaschen durchlaufen. Gemäß Fig. 8 sind drei Körper 35 in einer Dreieckskonstellation gelenkig miteinander verbunden, wobei eine Feder die beiden endseitigen Körper 35 gegeneinander zieht. Der Durchmesser der Körper 35 entspricht etwa dem der Leerflaschen 10 und bei der in Fig. 8 gezeigten Dreieckskonstellation der Körper 35 drücken die beiden endseitigen Körper 35 und der mittlere Körper 35 jeweils gegen die gegenüberliegenden Geländer 24 und rollen an diesen ab.

Eine andere Möglichkeit besteht darin eine größere Anzahl von Körpern 35 geradlinig oder auf einer Zickzacklinie zu verbinden, wie es in Fig. 9 gezeigt ist. Damit die Körper 35 auf die vorausgehenden Leerflaschen 10 einen ausreichenden Druck ausüben können, haben die Körper 35 zweckmäßig ein höheres Gewicht als die Leerflaschen 10 und/oder ihre Standfläche ist mit einem Belag höherer Reibung versehen, als ihn die Standflächen der Leerflaschen 10 haben.

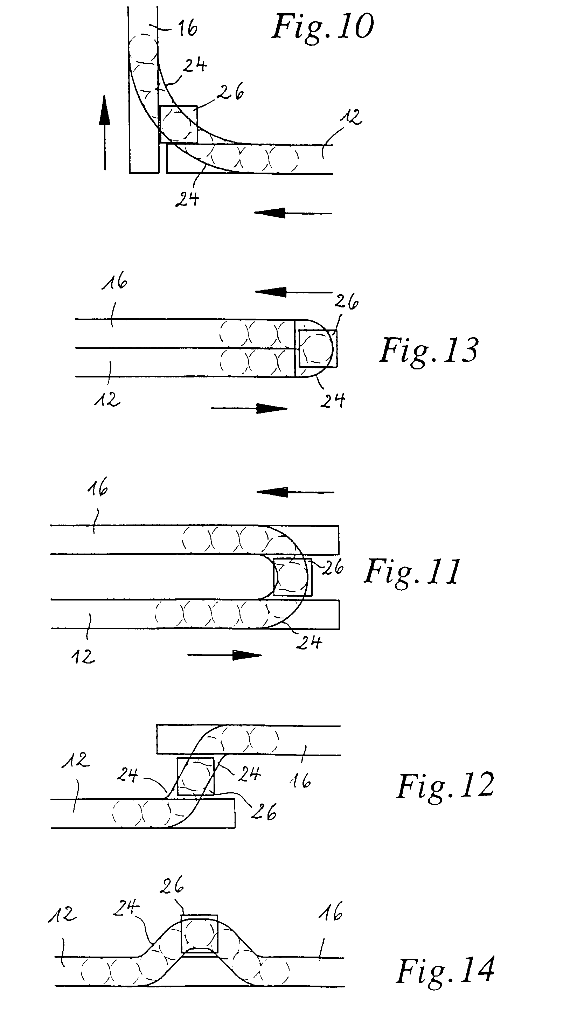

Bei den vorausgehend beschriebenen Ausführungsbeispielen waren der erste und der zweite Transporteur 12, 16 miteinander fluchtend auf einer Geraden angeordnet. Die beiden Transporteure 12, 16 können jedoch auch rechtwinklig zueinander angeordnet sein, wobei die Leerflaschen 10 auf einer gekrümmten Bahn 36 (Fig. 10) vom ersten Transporteur 12 auf den zweiten Transporteur 16 geführt werden und dabei im Winkel zwischen beiden Transporteuren 12, 16 ohne untere Abstützung nur von dem Geländer 24 und der zwischen den Leerflaschen 10 bestehenden Pressung gehalten werden. Gemäß Fig. 11 können die beiden Transporteure 12, 16 auch im Abstand gegenparallel angeordnet sein oder gemäß Fig. 12 parallel versetzt zueinander, wobei sich die Lücke 14 aus dem Abstand der Transporteure 12, 16 ergibt.

Gemäß Fig. 13 können die beiden Transporteure 12, 16 auch gegenparallel ohne Abstand angeordnet sein und befindet sich die Lücke 14 mit der darin stattfindenden Bodeninspektion in einem halbkreisförmigen Bereich, in dem die Leerflaschen 10 vom Ende des ersten Transporteurs 12 auf den zweiten Transporteur 16 übergeleitet werden.

Gemäß Fig. 14 können der erste und zweite Transporteur 12, 16 auch durch ein einziges Förderband gebildet werden, wobei die beiden Geländer 24 eine Ausbuchtung bilden, innerhalb der die Leerflaschen 10 ein kurzes Stück ohne untere Abstützung neben dem Förderband geführt werden, so daß dieses kurze Stück die Lücke 14 darstellt.

Bezüglich der Seitenwand-Inspektionsstation 18 und der Ausleitstation 20 wird auf die gleichzeitig eingereichte PCT-Anmeldung "Verfahren und Vorrichtung zum Drehen von rotationssymmetrischen Behältern, wie Flaschen, während des Transports unter Staudruck" (eigenes Zeichen 30560/Autorotation) und die ebenfalls gleichzeitig eingereichte PCT-Anmeldung "Vorrichtung zum Ausleiten von einzelnen oder mehreren rotationssymmetrischen Behältern aus einem unter Staudruck geförderten Strom der rotationssymmetrischen Behälter und Zylinder mit gesteuert ausfahrbarem Kolben" (eigenes Zeichen: 30561/Löffel) verwiesen.

## Patentansprüche

1. Verfahren zum Transportieren von Behältern (10) vorbei an einer Einrichtung (26) zum Inspizieren des Bodens der Behälter (10) auf Verunreinigungen, Materialfehler und Fremdkörper, wobei die Behälter (10) mittels eines ersten Transporteurs (12) zur Inspektionseinrichtung (26) gefördert werden und mittels eines zweiten Transporteurs (16) von der Inspektionseinrichtung (26) weggeführt werden, wobei zwischen dem ersten und dem zweiten Transporteur (12, 16) eine Lücke (14) besteht, innerhalb der die Behälter (10) zumindest nicht auf ihrer ganzen Standfläche unterstützt werden und innerhalb der die Böden der Behälter (10) inspiziert werden, und wobei die Behälter (10) auf dem ersten Transporteur (12), innerhalb der Lücke (14) und auf dem zweiten Transporteur (16) durch seitliche Führungseinrichtungen (24, 30) geführt werden, dadurch gekennzeichnet, daß die Behälter (10) zumindest innerhalb der Lücke (14) unter Staudruck transportiert werden.

2. Verfahren nach Anspruch 1, dadurch gekennzeichnet, daß die Behälter (10) innerhalb der Lücke (14) nicht auf ihrer Standfläche unterstützt werden.

3. Verfahren nach Anspruch 1 oder 2, dadurch gekennzeichnet, daß zum Aufbau des Staudrucks bei Betriebsbeginn und/oder zum Abbau des Staudrucks bei Betriebsende vor den ersten bzw. nach den letzten Behältern (10) mehrere miteinander mechanisch gekoppelte zylindrische Körper (35) durchgeleitet werden.

4. Vorrichtung zur Durchführung des Verfahrens nach einem der Ansprüche 1 bis 3 mit einem ersten Transporteur (12) zum Zuführen der Behälter (10) zur Inspektionseinrichtung (26), mit einem zweiten Transporteur (16) zum Wegführen der Behälter (10) von der Inspektionseinrichtung, wobei zwischen dem ersten und dem zweiten Transporteur (12, 16) eine Lücke (14) besteht, innerhalb der die Behälter (10) zumindest nicht auf ihrer ganzen Standfläche unterstützt werden, und wobei die Inspektionseinrichtung (26) die Böden der Behälter (10) innerhalb der Lücke (14) inspiziert, und mit seitlichen Führungseinrichtungen (24, 30), die sich zu beiden Seiten des ersten und des zweiten Transporteurs (12, 16) und der Lücke (14) erstrecken, dadurch gekennzeichnet, daß eine Einrichtung zur Erzeugung eines Staudrucks vorgesehen ist und daß die seitlichen Führungseinrichtungen (24, 30) so stabil ausgebildet sind, daß die Behälter (10) unter Staudruck transportiert werden können.

5. Vorrichtung nach Anspruch 4, dadurch gekennzeichnet, daß die Behälter (10) innerhalb der Lücke (14) nicht auf ihrer Standfläche unterstützt werden.

6. Vorrichtung nach Anspruch 4 oder 5, dadurch gekennzeichnet, daß die seitlichen Führungseinrichtungen feststehende Geländer (24) sind.

7. Vorrichtung nach einem der Ansprüche 4 bis 6, wobei es sich bei den Behältern (10) um Flaschen mit einer Verdickung am oberen Ende des Halses handelt, gekennzeichnet durch eine feste Halsführung (29), die etwas unterhalb der Verdickung der Flaschen angeordnet ist.

8. Vorrichtung nach Anspruch 4 bis 6, dadurch gekennzeichnet, daß innerhalb der Lücke (14) eine transparente Platte (28) höhenverstellbar angeordnet ist, wobei die transparente Platte (28) bei Betriebsbeginn und -ende zur Abstützung der Behälter (10) nach oben auf die Höhe der Transportebene (22) verschiebbar ist und während des Transports der Behälter (10) unter Staudruck abgesenkt wird.

9. Vorrichtung nach Anspruch 4 bis 6, dadurch gekennzeichnet, daß innerhalb der Lücke (14) eine Glasplatte angeordnet ist, die etwas unterhalb des Nieveaus des ersten und des zweiten Transporteurs (12, 16) angeordnet ist.

10. Vorrichtung nach Anspruch 4 bis 6, dadurch gekennzeichnet, daß innerhalb der Lücke (14) die seitlichen Führungseinrichtungen durch elastische Walzen (30) mit vertikaler Drehachse gebildet werden, wobei der Oberflächenabstand der Walzen (30) etwas kleiner als der Durchmesser der Behälter (10) ist und die Länge des Berührungsbereichs gleich oder kleiner als die Länge der Lücke (14) ist.

11. Vorrichtung nach Anspruch 4, dadurch gekennzeichnet, daß innerhalb der Lücke (14) Abstützplatten (31) angeordnet sind, die Aussparungen (32) aufweisen, die sich jeweils von der einen bzw. der anderen Seite bis zur Mitte erstrecken und in Transportrichtung eine Länge von etwa dem Durchmesser der Behälter (10) haben.

12. Vorrichtung nach Anspruch 4, dadurch gekennzeichnet, daß innerhalb der Lücke (14) schräg oder quer verlaufende Führungen (33) zum Abstützen der Behälter (10) angeordnet sind, wobei der Abstand der Führungen (33) in etwa dem halben Durchmesser der Behälter (10) entspricht.

## Claims

1. Method for conveying containers (10) past an device (26) for inspecting the bottom of the containers (10) for contamination, flaws and foreign bodies, in which the containers (10) are fed to the inspection device (26) by means of a first conveyor (12) and guided out of the inspection device (26) by means of a second conveyor (16), a gap (14) being left between the first and second conveyors (12, 16), within which the containers (10) are not supported, at least not over the whole of their under surface, and within which the bottoms of the containers (10) are inspected, and the containers (10) being guided by side guidance means (24, 30) on the first conveyor (12), within the gap (14) and on the second conveyor (16), characterised in that the containers (10), at least within the gap (14), are conveyed under back pressure.

2. Method according to Claim 1, characterised in that the containers (10) are not supported on their under surface within the gap (14).

3. Method according to Claim 1 or 2, characterised in that, in order to build up the back pressure at the beginning of operations and/or to reduce the back pressure at the end of operations before the first and after the last containers (10) respectively, several cylindrical bodies (35), which are mechanically coupled together, are fed through.

4. Apparatus for carrying out the method according to one of Claims 1 to 3 comprising a first conveyor (12) for guiding the containers (10) to the inspection device (26), a second conveyor (16) for guiding the containers (10) from the inspection device, a gap (14) being left between the first and second conveyors (12, 16), within which the containers (10) are not supported, at least not over the whole of their under surface, and in which the inspection device (26) inspects the bottoms of the containers (10) within the gap (14), and side guidance means (24, 30), which extend on both sides of the first and second conveyors (12, 16) and the gap (14), characterised in that means for generating a back pressure are provided and the side guidance means (24, 30) are designed so stable that the containers (10) can be conveyed under back pressure.

5. Apparatus according to Claim 4, characterised in that the containers (10) are not supported on their under surface within the gap (14).

6. Apparatus according to Claim 4 or 5, characterised in that the side guidance means are stationary rails (24).

7. Apparatus according to one of Claims 4 to 6, in which the containers (10) are bottles with a thickening at the top end of the neck, characterised by a static neck guide (29), which is arranged to be slightly below the thickening of the bottles.

8. Apparatus according to Claims 4 to 6, characterised in that a transparent plate (28) is arranged within the gap (14) in such a way that it can be moved in the vertical, such that the transparent plate (28) can be shifted upwards at the start and end of operations to the level of the conveyors (22) to support the containers (10), and is lowered while the containers (10) are being conveyed under back pressure.

9. Apparatus according to Claims 4 to 6, characterised in that a glass plate is arranged within the gap (14), slightly below the level of the first and second conveyors (12, 16).

10. Apparatus according to Claims 4 to 6, characterised in that, within the gap (14), the side guidance means is formed by elastic rollers (30) with vertical axes of rotation, in such a way that the distance separating the surfaces of the rollers (30) is slightly less than the diameter of the containers (10), and the length of the contact region is equal to or less than the length of the gap (14).

11. Apparatus according to Claim 4, characterised in that support plates (31) are arranged within the gap (14), which reveal spaces (32) which each extend from either side to the middle and are of a length in the conveying direction of approximately the diameter of the containers (10) .

12. Apparatus according to Claim 4, characterised in that guides (33) for supporting the containers (10) are arranged running obliquely or crosswise within the gap (14), such that the distance separating the guides (33) corresponds to approximately half the diameter of the containers (10).

## Revendications

1. Procédé permettant le transport de récipients (10) devant un dispositif (26) servant à inspecter le fond des récipients (10) en ce qui concerne la présence d'impuretés, des défauts de matière et la présence de corps étrangers, les récipients (10) étant acheminés au dispositif d'inspection (26) au moyen d'un premier transporteur (12) et étant éloignés du dispositif d'inspection (26) au moyen d'un second transporteur (16), tandis qu'entre le premier et le second transporteurs (12, 16), il existe un espace libre (14) dans lequel les récipients (10) ne sont pas soutenus sur toute leur surface de sustentation et dans lequel les fonds des récipients (10) sont inspectés, les récipients (10) étant guidés au moyen de dispositifs de guidage latéral (24, 30) sur le premier transporteur (12), dans l'espace libre (14) et sur le second transporteur (16), caractérisé en ce que les récipients (10) sont transportés sous une pression d'accumulation au moins dans l'espace libre (14).

2. Procédé suivant la revendication 1, caractérisé en ce que les récipients (10) ne sont pas soutenus sur leurs surfaces de sustentation dans l'espace libre (14).

3. Procédé suivant la revendication 1 ou 2, caractérisé en ce que, pour l'établissement de la pression d'accumulation au début du fonctionnement et/ou pour la suppression de la pression d'accumulation à la fin du fonctionnement, plusieurs corps cylindriques (35) accouplés mécaniquement entre eux sont traversés respectivement en amont des premiers récipients (10) et en aval des derniers récipients (10).

4. Dispositif de mise en oeuvre du procédé suivant l'une des revendications 1 à 3, comprenant un premier transporteur (12) servant à acheminer les récipients (10) au dispositif d'inspection (26), un second transporteur (16) servant à éloigner les récipients (10) du dispositif d'inspection, tandis qu'entre le premier et le second transporteurs (12, 16), il existe un espace libre (14) dans lequel les récipients (10) ne sont pas au moins soutenus sur toute leur surface de sustentation, le dispositif d'inspection (26) inspectant les fonds des récipients (10) dans l'espace libre (14), et des dispositifs de guidage latéral (24, 30) qui s'étendent des deux côtés du premier et du second transporteurs (12, 16) et de l'espace libre (14), caractérisé en ce qu'il est prévu un dispositif servant à produire une pression d'accumulation et en ce que les dispositifs de guidage latéral (24, 30) sont réalisés d'une manière suffisamment résistante dans le temps pour que les récipients (10) puissent être transportés sous une pression d'accumulation.

5. Dispositif suivant la revendication 4, caractérisé en ce que les récipients (10) ne sont pas soutenus sur leur surface de sustentation dans l'espace libre (14).

6. Dispositif suivant la revendication 4 ou 5, caractérisé en ce que les dispositifs de guidage latéral sont des barrières (24) fixes.

7. Dispositif suivant l'une des revendications 4 à 6, lorsqu'en ce qui concerne les récipients (10), il s'agit de bouteilles comportant une partie en surépaisseur à l'extrémité supérieure du goulot, caractérisé par un guide de goulot (29) fixe qui est disposé légèrement au-dessous de la partie en surépaisseur des bouteilles.

8. Dispositif suivant une revendication 4 à 6, caractérisé en ce qu'une plaque (28) transparente est disposée dans l'espace libre (14), la plaque (28) transparente pouvant être déplacée vers le haut, jusqu'au niveau du plan de transport (22), au début et à la fin du fonctionnement en vue de soutenir les récipients (10), et est abaissée pendant le transport des récipients (10) sous une pression d'accumulation.

9. Dispositif suivant une revendication 4 à 6, caractérisé en ce qu'il est prévu, disposée dans l'espace libre (14), une plaque en couvert qui est située légèrement au-dessous du niveau du premier et du second transporteurs (12, 16).

10. Dispositif suivant une revendication 4 à 6, caractérisé en ce que, dans l'espace libre (14), les dispositifs de guidage latéral sont constitués de rouleaux (30) élastiques à axe vertical de rotation, l'espacement des surfaces des rouleaux (30) étant légèrement inférieur au diamètre des récipients (10) et la longueur de la zone de contact étant égale ou inférieure à la longueur de l'espace libre (14).

11. Dispositif suivant la revendication 4, caractérisé en ce qu'il est prévu, disposées dans l'espace libre (14), des plaques d'appui (31) qui comportent des évidements (32) qui s'étendent respectivement de l'un des côtés et de l'autre côté jusqu'au milieu et ont, suivant la direction de transport, une longueur sensiblement égale au diamètre des récipients (10).

12. Dispositif suivant la revendication 4, caractérisé en ce que des guides (33) orientés d'une manière inclinée ou transversale et servant à l'appui des récipients (10) sont disposés dans l'espace libre (14), l'espacement des guides (33) étant sensiblement égal au demi-diamètre des récipients (10).
